# EUROPÄISCHE PATENTSCHRIFT

(11) **EP 3 602 104 B1**
(45) Veröffentlichungstag und Bekanntmachung des Hinweises auf die Patenterteilung: **26.06.2024**
(21) Anmeldenummer: 18713936.5
(22) Anmeldetag: 28.03.2018
(51) Int. Cl.: G01S 7/481

(54) **OPTISCHES SCANSYSTEM**
OPTICAL SCANNING SYSTEM
SYSTÈME DE BALAYAGE OPTIQUE

(30) Priorität: 31.03.2017 DE 102017205504
(43) Veröffentlichungstag der Anmeldung: 05.02.2020
(73) Patentinhaber: Robert Bosch GmbH, 70442 Stuttgart (DE)
(72) Erfinder: BOGATSCHER, Siegwart, 74372 Sersheim (DE); HASSELBACH, Juergen, 70178 Stuttgart (DE); SPARBERT, Jan, 71277 Rutesheim (DE); HAS, Remigius, 71120 Grafenau-Daetzingen (DE)
(86) Internationale Anmeldenummer: PCT/EP2018/057930
(87) Internationale Veröffentlichungsnummer: WO 2018/178157

(56) Entgegenhaltungen:
- EP-A2- 1 562 055
- AT-A4- 507 684
- DE-A1- 10 002 137
- DE-A1- 19 928 958
- DE-B3-102014 101 312

## Beschreibung

### Stand der Technik

Die vorliegende Erfindung betrifft ein optisches Scansystem. Aktuelle Scansysteme, insbesondere biaxiale, rotierende 3D-Laserscanner, sogenannte Makroscanner, bei denen die optischen Achsen von Sende- und Empfangseinheit unter einem gewissen Abstand parallel zueinander verlaufen, weisen eine gewisse Baugröße auf. Dies gilt sowohl für Makroscanner, bei denen ein Spiegel oder ein Spiegelsystem rotiert, als auch für Makroscanner, bei denen Sende- und Empfangseinheit parallel zueinander auf dem Rotor angeordnet sind.

Für die Integration in bestimmten Umgebungen, bspw. in Fahrzeugscheinwerfern, ist jedoch eine besonders flache Bauform mit geringer Bauhöhe und mit kleinem Rotordurchmesser vorteilhaft. Ein Ansatz, um die Baugröße eines Makroscanners zu reduzieren ist es, Sende- und Empfangsstrahlengang teilweise über die gleiche Linse zu führen. Da damit die optische Achse von Sende- und Empfangseinheiten außerhalb des Sensors identisch sind, kann man derartige Scanner auch koaxial nennen.

Aus der US8836922B1 ist ein koaxialer Makroscanner bekannt, in dem eine Empfangslinse gleichzeitig auch als Kollimationslinse für einen Sendepfad genutzt wird. Ein Nachteil des dort offenbarten Ansatzes ist es, dass der Sendestrahl nicht bis zu einem maximalen Linsendurchmesser aufgeweitet und gleichzeitig kollimiert werden kann, was jedoch für eine erhöhte Sendeleistung und damit eine erhöhte Reichweite bei gleichzeitig sichergestellter Augensicherheit vorteilhaft wäre. Weiterhin ist dabei der Durchmesser der Empfangsapparatur kleiner als der Rotordurchmesser. Ein Laserscanner mit Rotor und einer auf dem Rotor montierten Linse ist aus der DE102014101312B3 bekannt.

Die DE102012102244B4 und die DE102013215627A1 offenbaren dazu weitere optische Scansysteme.

Die EP1562055A2 offenbart ein Scansystem gemäß dem Oberbegriff des Anspruchs 1. Die AT507684A4 offenbart ein Scansystem, welches eine um eine Achse rotierende Linse umfasst. Die DE199288958A1 offenbart ein Scansystem mit einer im Wesentlichen Kugelförmigen Linse.

### Offenbarung der Erfindung

Das erfindungsgemäße optische Scansystem umfasst einen Rotor, welcher dazu eingerichtet ist, bei einem Scanvorgang um eine Rotationsachse zu rotieren, eine optische Linse, die derart auf dem Rotor angeordnet ist, dass die Linse auf der Rotationsachse liegt, eine optische Sendeeinheit, die an dem Rotor angeordnet ist und dazu eingerichtet ist, einen Scanstrahl in Richtung einer optischen Achse der Linse auszusenden und eine optische Empfangseinheit, die an dem Rotor angeordnet ist und einen Detektor umfasst, der dazu eingerichtet ist, einen reflektieren Scanstrahl zu empfangen, wobei der Detektor derart angeordnet ist, dass der reflektierte Scanstrahl mittels der Linse auf den Detektor fokussiert wird.

Sowohl die optische Sendeeinheit als auch die optische Empfangseinheit sind an dem Rotor angeordnet. Dies bedeutet, dass eine mechanische Verbindung zwischen der optischen Sendeeinheit und dem Rotor und zwischen der optischen Empfangseinheit und dem Rotor besteht, sodass bei einer Rotation des Rotors auch die optische Sendeeinheit und die optische Empfangseinheit um die Rotationsachse bewegt werden. Da die optische Linse ebenfalls auf dem Rotor angeordnet ist, rotiert diese mit dem Rotor um die Rotationsachse. Der Rotor ist bevorzugt eine Kreisscheibe. Die optische Linse, die optische Sendeeinheit und die optische Empfangseinheit sind bevorzugt auf einer gemeinsamen Seite des Rotors angeordnet.

Durch eine Apertur der Linse wird eine Empfindlichkeit des optischen Scansystems wesentlich beeinflusst. Daher ist es vorteilhaft, wenn die Linse möglichst groß ausgeführt wird. Bei der erfindungsgemäßen Anordnung der optischen Linse rotiert diese mit dem Rotor. Daher benötigt die Linse, welche ein besonders großes Bauelement des optischen Scansystems ist, einen minimalen Raum für die Rotation. Somit wird ein besonders kompakter Aufbau des optischen Scansystems ermöglicht. Das optische Scansystem kann somit besonders in seiner Höhe und in seinem Durchmesser besonders kompakt ausgeführt werden. Ferner wird durch das erfindungsgemäße optische Scansystem eine maximale Empfangsapertur ermöglicht, welche direkt abhängig von einem Durchmesser des Rotors ist. Es kann somit ein optisches Scansystem mit besonders hoher Reichweite bei geringen Ausmaßen des optischen Scansystems geschaffen werden. Da der Rotor mit den darauf befindlichen Einheiten um die Rotationsachse rotiert, wird eine Messung über 360° in einer Scanebene, bspw. horizontal, ermöglicht.

Es wird daher ein optisches Scansystem geschaffen, dessen Empfangsapertur dem Rotordurchmesser entspricht und dessen Sendestrahl zur Erhöhung der Sendeleistung bei gleichzeitig sichergestellter Augensicherheit aufgeweitet ist. Ferner weist das erfindungsgemäße optische Scansystem den Vorteil auf, dass dieses einfach justierbar ist. So können besonders große optische Elemente zum Einsatz kommen, wodurch sich Toleranzen einfacher beherrschen lassen oder lediglich einen relativ geringen Einfluss auf die Qualität des optischen Scansystems haben. Da das Scansystem ein koaxiales Scansystem ist, sind Toleranzen gegenüber dem Rotor wenig relevant. Das optische System ist zudem kostengünstig herzustellen, da lediglich eine minimale Anzahl von optischen Elementen verwendet wird. Insbesondere wenn die Linse in ihrem Zentrum eine Durchgangsöffnung oder einen Montagesockel auf der Oberfläche aufweist, kann dieses zu einer toleranzarmen Verpressung oder Justage, einschließlich Verklebung mit Sende- und Empfangselementen, genutzt werden.

Die optische Linse ist derart angeordnet, dass ein Schwerpunkt der Linse auf der Rotationsachse liegt. Die Linse ist somit derart angeordnet, dass diese bei einer Rotation des Rotors um ihren Schwerpunkt rotiert. Der Schwerpunkt ist dabei ein Masseschwerpunkt der Linse oder ein geometrischer Schwerpunkt der Linse. Besonders bevorzugt ist der Schwerpunkt sowohl ein Masseschwerpunkt als auch ein geometrischer Schwerpunkt der Linse.

Dabei wird durch einen äußeren Umfang der Linse bei einer Rotation um die Rotationsachse eine Hüllfläche definiert und die optische Sendeeinheit und die optische Empfangseinheit sind derart auf dem Rotor angeordnet, dass ein Bereich der optischen Sendeeinheit und/oder der optischen Empfangseinheit innerhalb des durch die Hüllfläche definierten Volumens angeordnet ist,

Mit anderen Worten ist es also vorteilhaft, wenn die optische Sendeeinheit und die optische Empfangseinheit derart auf dem Rotor angeordnet sind, dass ein Punkt der optischen Linse, welcher am weitesten von der Rotationsachse entfernt ist, weiter von der Rotationsachse entfernt ist als ein Punkt der optischen Empfangseinheit und der optischen Sendeeinheit. Die Hüllfläche ist eine Oberfläche eines Rotationskörpers, welcher bei der Rotation der Linse um die Rotationsachse geformt wird. Dies gilt insbesondere dann, wenn diese Betrachtung für eine einzelne Ebene erfolgt, die senkrecht auf der Rotationsachse steht. Mit einfachen Worten gesagt bedeutet dies, dass die Sendeeinheit und die optische Empfangseinheit in einem Raum um die optische Linse angeordnet sind, der für eine Rotation der optischen Linse benötigt wird. Da die Empfangseinheit und die Sendeeinheit jedoch mit der Linse rotieren, kommt es zu keiner Kollision. Es kann somit ein besonders kompaktes optisches Scansystem geschaffen werden.

Auch ist es vorteilhaft, wenn die optische Achse der Linse senkrecht auf der Rotationsachse steht. Auf diese Weise wird ein besonders großes Sichtfeld für das optische Scansystem, beispielsweise in einer horizontalen Ebene, geschaffen.

Die Unteransprüche zeigen bevorzugte Weiterbildungen der Erfindung.

So, ist es vorteilhaft, wenn die optische Empfangseinheit einen ersten Spiegel umfasst, wobei der erste Spiegel derart angeordnet ist, dass der reflektierte Scanstrahl nach einem Durchlaufen der Linse durch den ersten Spiegel auf den Detektor gelenkt wird. Es wird somit ermöglicht, dass ein Empfangsstrahlengang zwischen Linse und Detektor Platz findet, da dieser mithilfe des ersten Spiegels gefaltet wird. Abhängig von einer Anordnung der optischen Bauelemente der Empfangseinheit ist es vorteilhaft, wenn die optische Empfangseinheit weitere Linsen und Spiegel umfasst.

Ferner ist es vorteilhaft, wenn der erste Spiegel eine fokussierende Oberfläche, insbesondere eine gewölbte Oberfläche aufweist. Der erste Spiegel ist somit gekrümmt. Auf diese Weise können Aberrationen der Linse teilweise kompensiert werden.

Des Weiteren ist es vorteilhaft, wenn die optische Sendeeinheit einen optischen Emitter und einen zweiten Spiegel umfasst, wobei der zweite Spiegel derart angeordnet ist, dass der von dem optischen Emitter ausgesandte Scanstrahl durch den zweiten Spiegel in Richtung der optischen Achse der Linse umgelenkt wird. Der optische Emitter ist bevorzugt ein Laser, insbesondere eine Laserdiode. Durch eine solche Anordnung eines zweiten Spiegels wird ermöglicht, dass lediglich der zweite Spiegel, nicht aber der gesamte optische Emitter vor der

Linse angeordnet ist. Es wird somit eine maximale Nutzfläche der Linse erreicht. Dies führt zu einer hohen Empfindlichkeit des optischen Scansystems.

Ferner ist es vorteilhaft, wenn die optische Sendeeinheit eine Kollimationslinse umfasst. Auf diese Weise wird die Kollimationslinse platzsparend in das optische Scansystem integriert. Das optische Scansystem kann somit auf einfache Weise für eine bestimmte Scandistanz optimiert werden. Die Kollimationslinse ist dabei insbesondere eine Linse einer Linsenanordnung durch welche ein einzelner Scanstrahl oder mehrere Scanstrahlen kollimiert werden.

Auch ist es vorteilhaft, wenn die optische Empfangseinheit und/oder die optische Sendeeinheit einen optischen Filter umfasst. Durch solche Filter kann die Empfindlichkeit des optischen Scansystems bei gleichbleibend geringer Bauform erreicht werden.

Insbesondere ist es vorteilhaft, wenn das optische Scansystem ein koaxialer Makroscanner ist.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung eines erfindungsgemäßen optischen Scansystems gemäß einer ersten Ausführungsform der Erfindung,
- Figur 2: eine Darstellung eines erfindungsgemäßen Scansystems gemäß einer zweiten Ausführungsform der Erfindung,
- Figur 3: eine Darstellung des erfindungsgemäßen Scansystems gemäß der zweiten Ausführungsform der Erfindung,
- Figur 4: eine Darstellung eines erfindungsgemäßen Scansystems gemäß einer dritten Ausführungsform der Erfindung, und
- Figur 5: eine Darstellung einer vorteilhaften Sendeeinheit.

### Ausführungsformen der Erfindung

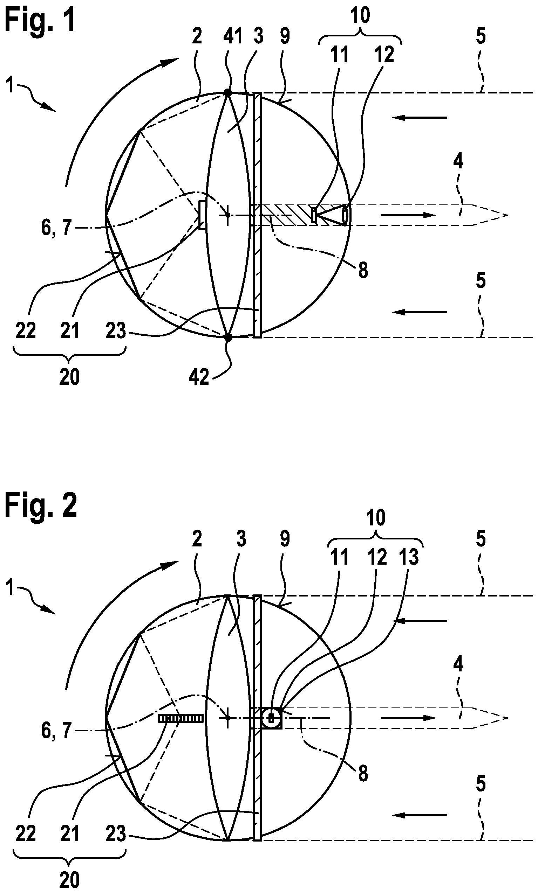

Figur 1 zeigt ein erfindungsgemäßes optisches Scansystem 1 gemäß einer ersten Ausführungsform der Erfindung. Dabei ist das optische Scansystem 1 in einem Schnittbild entlang einer ersten Schnittebene dargestellt. Dabei steht eine Rotationsachse des optischen Scansystems senkrecht auf der dargestellten ersten Schnittebene.

Das optische Scansystem 1 ist ein koaxialer Makroscanner. Dies bedeutet, dass ein Scanstrahl 4, welcher von dem optischen Scansystem 1 ausgesandt wird, eine parallele, in dieser ersten Ausführungsform identische, Achse mit einem reflektierten Scanstrahl 5 aufweist, der von dem optischen Scansystem 1 empfangen wird. Das optische Scansystem 1 umfasst einen Rotor 2, eine optische Linse 3, eine optische Sendeeinheit 10 und eine optische Empfangseinheit 20.

Der Rotor 2 ist dazu eingerichtet, bei einem Scanvorgang um eine Rotationsachse 6 zu rotieren. In dieser ersten Ausführungsform der Erfindung ist der Rotor 2 eine Kreisscheibe und die Rotationsachse 6 steht senkrecht auf einer kreisrunden Oberfläche des Rotors 2 und durchläuft dabei einen Mittelpunkt der kreisrunden Oberfläche des Rotors 2. Es wird darauf hingewiesen, dass der Rotor 2 in alternativen Ausführungsformen eine andere Form aufweisen kann. So kann der Rotor 2 bspw. aus einzelnen Elementen bestehen, welche eine Halterung für weitere Elemente des optischen Scansystems 1, insbesondere für die optische Linse 3, die optische Sendeeinheit 10 und/oder die optische Empfangseinheit 20 bilden. Bevorzugt weist der Rotor 2 Ausnehmungen auf, die eine Ausbalancierung des Rotors 2 und der darauf angeordneten Komponenten ermöglicht, sodass eine Unwucht bei der Rotation vermieden wird. Das optische Scansystem 1 umfasst einen Motor, durch welchen der Rotor 2 angetrieben wird, um die Rotationsachse 6 zu rotieren.

Die optische Linse 3 ist die derart auf dem Rotor 2 angeordnet ist, dass ein Schwerpunkt 7 der optischen Linse 3 auf der Rotationsachse 6 liegt. Da somit ein Punkt der optischen Linse 3 auf der Rotationsachse 6 liegt, ist die optische Linse 3 auf der Rotationsachse angeordnet. Die optische Linse 3 ist in dieser ersten Ausführungsform z.B. eine bikonvexe Linse. Ein geometrischer Schwerpunkt und ein Massenschwerpunkt der optischen Linse 3 fallen dabei auf einen gemeinsamen Schwerpunkt 7. Die optische Linse 3 weist einen Linsendurchmesser auf, der einem Durchmesser des Rotors 2 entspricht. Die optische Linse 3 ist zentral auf dem Rotor 2 angeordnet. Dabei ist eine optische Achse 8 der Linse 3 derart ausgerichtet, dass diese senkrecht auf der Rotationsachse 6 steht. In Figur 1 ist die Rotationsachse 6 als ein Punkt dargestellt, da diese aus der in Figur 1 dargestellten Ebene heraustritt. Die optische Achse 8 der Linse 3 liegt somit in einer Ebene, die parallel zu einer Ebene ist, in welcher der Rotor 2 rotiert.

Die optische Sendeeinheit 10 ist an dem Rotor 2 angeordnet und ist dazu eingerichtet, einen Scanstrahl 4 in Richtung der optischen Achse 8 der Linse 3 auszusenden. In dieser ersten Ausführungsform der Erfindung umfasst die optische Sendeeinheit 10 einen optischen Emitter 11, der eine Laserdiode ist, und eine Kollimationslinse 12. Der Emitter 11 ist auf einer ersten Seite der optischen Linse 3 über dem Rotor 2 angeordnet. Dabei ist der optische Emitter 11 auf der optischen Achse 8 der optischen Linse 3 angeordnet. Der optische Emitter 11 ist dabei derart ausgerichtet, dass dieser einen Laserstrahl abgibt, der sich entlang der optischen Achse 8 der Linse 3 von der Linse 3 weg ausbreitet. Der von dem optischen Emitter 11 abgegebene Laserstrahl ist der Scanstrahl 4. Bevor der Scanstrahl 4 in ein Umfeld des optischen Scansystems 1 abgegeben wird, trifft dieser auf die Kollimationslinse 12, welche vor dem optischen Emitter 11 angeordnet ist. Alternativ ist anstelle der Kollimationslinse 12 eine Linsenanordnung angeordnet, welche mehrere Kollimationslinsen umfasst. Durch einen Abstand der Kollimationslinse 12 zu dem optischen Emitter 11 bzw. durch eine Linsenkrümmung der Kollimationslinse 12 kann eine Aufweitung des Scanstrahls 4 definiert werden. Da der optische Emitter 11 und die Kollimationslinse 12 hintereinander auf der optischen Achse 8 der Linse 3 angeordnet sind, wird nur ein minimaler Bereich der Linse 3 durch die optische Sendeeinheit 10 abgeschattet.

Das optische Scansystem 1 umfasst ferner die optische Empfangseinheit 20, die an dem Rotor 2 angeordnet ist und einen Detektor 21 umfasst, der dazu eingerichtet ist, einen reflektierten Scanstrahl 5 zu empfangen, wobei der Detektor 21 derart angeordnet ist, dass der reflektierte Scanstrahl 5 mittels der optischen Linse 3 auf den Detektor 21 fokussiert wird. Dabei umfasst die optische Empfangseinheit 20 einen ersten Spiegel 22. Der erste Spiegel 22 ist derart angeordnet, dass der reflektierte Scanstrahl 5 nach einem Durchlaufen der Linse 3 durch den ersten Spiegel 22 auf den Detektor 21 gelenkt wird. Dabei können zur Optimierung eines optischen Strahlengangs in der Empfangseinheit 20 zwischen der Linse 3 und dem ersten Spiegel 22 optional weitere optische Elemente angeordnet sein. Auch zwischen erstem Spiegel 22 und Detektor 21 können optional weitere optische Elemente, insbesondere weitere Linsen und/oder Spiegel, angeordnet sein.

Ferner umfasst die optische Empfangseinheit 20 einen optischen Filter 23. Der optische Filter 23 ist auf der ersten Seite der Linse 3 angeordnet, wobei der optische Filter 23 zwischen der Sendeeinheit 10 und der optischen Linse 3 angeordnet ist. Der optische Filter 23 erstreckt sich über eine gesamte Oberfläche der optischen Linse 3. Der optische Filter 23 ist dabei derart gewählt, dass dieser lediglich für Licht mit einer Wellenlänge durchlässig ist, welches in einem Wellenlängenbereich um die Wellenlänge des Scanstrahls 4 liegt.

Der erste Spiegel 22 ist auf einer zweiten Seite der optischen Linse 3 angeordnet, welche eine der ersten Seite der optischen Linse 3 gegenüberliegende Seite ist. Der erste Spiegel 22 ist ein Hohlspiegel. Insbesondere weist der erste Spiegel 22 einzelne ebene Flächen auf, die jeweils unterschiedlich ausgerichtet sind. Durch den ersten Spiegel 22 wird das Licht des reflektierten Scanstrahls 5, welches auf diesen fällt, in Richtung des Detektors 21 umgelenkt und auf diesen fokussiert. Der Detektor 21 ist ein sogenannter Sensor Array. Das bedeutet, dass der Detektor 21 eine Oberfläche aufweist, auf der eine Vielzahl von Fotosensoren angeordnet ist. Der Detektor 21 ist auf der zweiten Seite der optischen Linse 3 angeordnet. Dabei ist eine aktive Fläche des Detektors 21 derart ausgerichtet, dass diese von der optischen Linse 3 weg gerichtet ist. Der Detektor 21 ist dabei in einem Zentrum einer Oberfläche der optischen Linse 3, also vor deren Schwerpunkt 7, angeordnet.

Wurde der Scanstrahl 4 von der optischen Sendeeinheit 10 und somit von dem optischen Scansystem 1 ausgesandt, so wird dieser an Objekten in einer Umgebung des optischen Scansystems 1 reflektiert. Ist dies der Fall, so wird dieser als reflektierter Scanstrahl 5 zurückgeworfen. Der reflektierte Scanstrahl 5 ist somit weniger fokussiert als der Scanstrahl 4. Der reflektierte Scanstrahl 5 wird aus der Richtung zurückgeworfen, in welche der Scanstrahl 4 kurz zuvor ausgesandt wurde. Eine minimale Bewegung des Rotors 2 durch dessen Rotation wurde bei dieser Annahme vernachlässigt. Der reflektierte Scanstrahl 5 trifft somit auf die optische Linse 3 und wird durch diese verjüngt. Dieser verjüngte reflektierte Scanstrahl 5 trifft auf den ersten Spiegel 22 und wird von diesem reflektiert. Dabei wird der reflektierte Scanstrahl 5 weiter verjüngt und auf den Detektor 21 fokussiert. Der reflektierte Scanstrahl 5 wird somit nach einem Durchlaufen der Linse 3 durch den ersten Spiegel 22 auf den Detektor 21 gelenkt. Dadurch, dass der erste Spiegel 22 als ein Hohlspiegel ausgeführt ist, weist dieser eine fokussierende Oberfläche auf, welche eine gewölbte Oberfläche ist. Die gewölbte Oberfläche ist dabei die reflektierende Oberfläche des ersten Spiegels 22, welche derart angeordnet ist, dass diese auf einer Seite des ersten Spiegels 22 liegt, die aufseiten der optischen Linse 3 liegt.

In dieser in Figur 1 dargestellten ersten Ausführungsform ist ein besonders kompaktes optisches Scansystem 1 dargestellt. Bei dem in Figur 1 dargestellten optischen Scansystem 1 sind die optische Empfangseinheit 20 und die optische Sendeeinheit 10 besonders nah an der optischen Linse 3 angeordnet. Das optische Scansystem 1 ist dabei derart gestaltet, dass die optische Sendeeinheit 10 und die optische Empfangseinheit 20 derart auf dem Rotor angeordnet sind, dass ein Bereich der optischen Sendeeinheit 10 und der optischen Empfangseinheit 20 innerhalb einer Hüllfläche 9 angeordnet sind. Die Hüllfläche 9 ist dabei durch einen äußeren Umfang der Linse 3 bei einer Rotation der optischen Linse 3 um die Rotationsachse 6 definiert. Wird die in Figur 1 dargestellte optische Linse 3 in Rotation versetzt, so wird diese bei schneller Rotation als eine Kugel wahrgenommen, da die optische Linse 3 einen kreisrunden äußeren Umfang aufweist. Eine Rotationsform der optischen Linse 3 ist somit eine Kugel. Entsprechend ist die Kugeloberfläche die Hüllfläche 9 der rotierenden optischen Linse 3. Die Hüllfläche 9 ist in dem dargestellten Schnittbild somit ein Kreis, welcher durch die äußersten Punkte 41, 42 auf dem äußeren Umfang der optischen Linse 3 abgelaufen wird. Die optische Sendeeinheit 10 und die optische Empfangseinheit 20 sind in der dargestellten ersten Schnittebene vollständig innerhalb dieses Kreises und somit vollständig innerhalb der Hüllfläche 9 angeordnet.

In dieser ersten Ausführungsform befindet sich sowohl die Sendeeinheit 10 als auch der Detektor 21 in der optischen Achse 8 der optischen Linse 3 und somit des optischen in der optischen Achse des optischen Sensorsystems 1. Die optische Achse 8 ist eine Achse, die durch die Mitte der optischen Linse 3 verläuft. Zwischen der optischen Linse 3 und der Sendeeinheit 10 können optional auch ein optischer Filter 23, insbesondere ein Bandpassfilter, oder andere optische Filter platziert sein.

Figur 2 zeigt eine Darstellung eines optischen Scansystems 1 gemäß einer zweiten Ausführungsform der Erfindung. Die zweite Ausführungsform der Erfindung entspricht im Wesentlichen der ersten Ausführungsform der Erfindung. Dabei ist in Figur 2 die erste Schnittfläche dargestellt, die auch in Figur 1 dargestellt ist.

Die zweite Ausführungsform der Erfindung unterscheidet sich von der ersten Ausführungsform der Erfindung darin, dass der Detektor 21 und der optische Emitter 11 auf der Oberfläche des Rotors 2 angeordnet sind. Dabei ist der Emitter 11 derart angeordnet, dass der Scanstrahl 5 parallel zu der Rotationsachse 6 abgestrahlt wird. Auf der ersten Seite der optischen Linse 3 ist im Bereich des Zentrums der Oberfläche der optischen Linse 3 ein zweiter Spiegel 13 angeordnet. Dieser ist bevorzugt an der optischen Linse 3 befestigt. Dabei steht der zweite Spiegel 13 in einem 45 °-Winkel gegenüber dem von dem Emitter 11 ausgesandten Scanstrahl 4. Der Scanstrahl 4 wird daher um 90 ° abgelenkt und verläuft dann entlang der optischen Achse 8 der optischen Linse 3.

Der Detektor 21 ist auf der zweiten Seite der optischen Linse 3 auf der Oberfläche des Rotors 2 angeordnet, wobei eine aktive Oberfläche des Detektors 21 von dem Rotor 2 weg gerichtet ist. Um diese Anordnung des Detektors 21 zu ermöglichen, ist eine Position und Krümmung des ersten Spiegels 22 und eine Wölbung des ersten Spiegels 22 entsprechend gewählt.

In dieser zweiten Ausführungsform sind der optische Emitter 11 und der Detektor 21 somit in einer durch die optische Achse 8 der optischen Linse 3 definierten Richtung außerhalb der Linsenoberfläche der optischen Linse 8 angeordnet. Dadurch wird vermieden, dass es zu einer Abschattung der Linse durch den der optischen Emitter 11 und den Detektor 21 kommt.

In dieser zweiten Ausführungsform kommt mit dem zweiten Spiegel 13 ein kleiner Umlenkspiegel in der Mitte der optischen Linse 3 zum Einsatz, der optional auch gekrümmt sein kann. Dieser Umlenkspiegel lenkt den Scanstrahl 4 in Richtung der optischen Achse 8 der optischen Line 3 um und erzeugt die gewünschte vertikale Divergenz. Der optional gekrümmte erste Spiegel 22 im Empfangsstrahlengang ist in dieser zweiten Ausführungsform geneigt, damit die Empfangsstrahlen auf den Detektor 21 fokussiert werden können. Die Anzahl der Linsen im Empfangspfad kann bei Bedarf zur Verbesserung der Abbildungsqualität erhöht werden, bspw. indem eine weitere Linse vor dem Detektor 21 angeordnet wird.

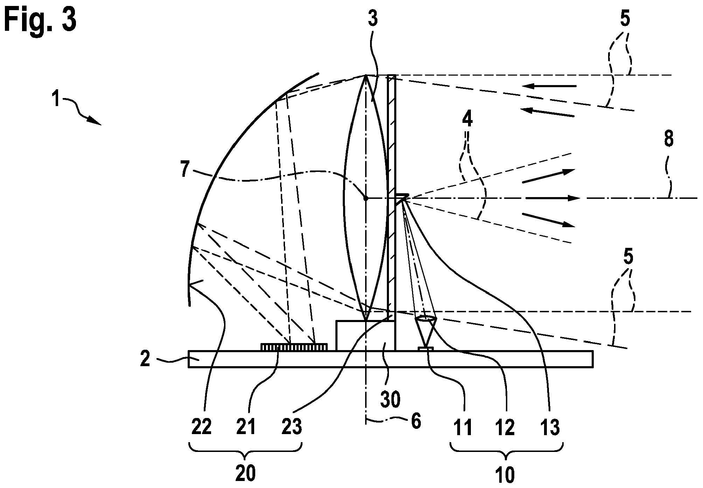

Figur 3 zeigt das optische Scansystem 1 gemäß der zweiten Ausführungsform der Erfindung. Dabei ist das optische Scansystem 1 in einem Schnittbild entlang einer zweiten Schnittebene dargestellt, in welcher die Rotationsachse 6 liegt.

Dabei ist aus Figur 3 ersichtlich, dass der zweite Spiegel 13 an dem optischen Filter 23 befestigt ist. Es entfallen somit zusätzliche Halterungselemente für den zweiten Spiegel 13. Ferner ist in dem Scanstrahl 4 zwischen dem optischen Emitter 11 und dem zweiten Spiegel 13 eine Kollimationslinse 12 angeordnet. Somit wird in dieser Ausführungsform eine Anpassung des Scanstrahls 4 für bestimmte Scanbereiche ermöglicht. Wird der Scanstrahl 4 von dem optischen Emitter 11 abgegeben, so durchläuft dieser die Kollimationslinse 12 und trifft auf den zweiten Spiegel 13. Durch eine entsprechende Neigung des zweiten Spiegels 13 gegenüber dem abgegebenen Scanstrahl 4 wird dieser entlang der optischen Achse 8 der Linse 3 ausgerichtet. Der zweite Spiegel 13 ist somit derart angeordnet, dass der von dem optischen Emitter 11 ausgesandte Scanstrahl 4 durch den zweiten Spiegel 13 in Richtung der optischen Achse 8 der Linse 3 umgelenkt wird. Es ist ersichtlich, dass die optische Linse 3 auf einer Halterung 30 angeordnet ist.

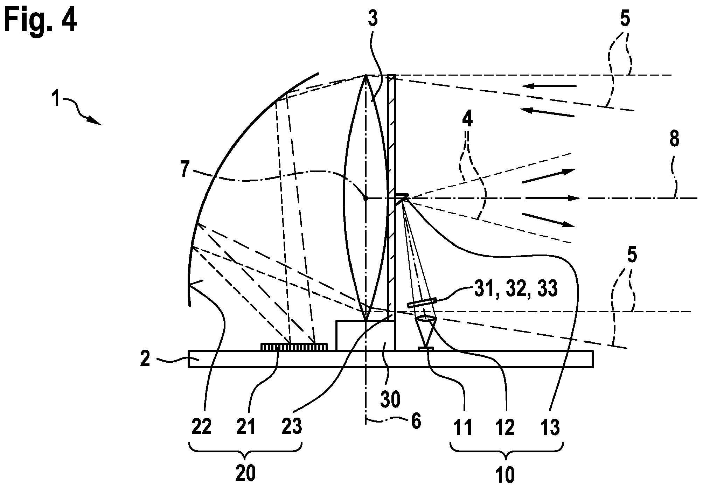

Figur 4 ist eine Darstellung eines optischen Scansystems 1 gemäß einer dritten Ausführungsform der Erfindung. Die dritte Ausführungsform der Erfindung entspricht im Wesentlichen der zweiten Ausführungsform der Erfindung. Dabei ist in Figur 4 die zweite Schnittebene dargestellt, die auch in Figur 3 dargestellt ist.

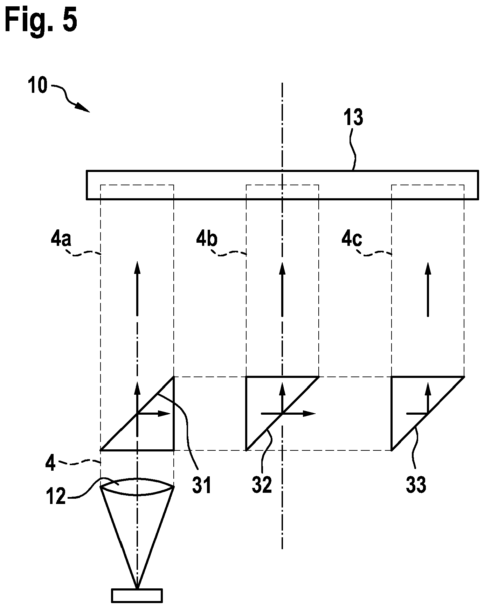

Das in Figur 4 dargestellte Scansystem 1 gemäß der dritten Ausführungsform der Erfindung umfasst die in Figur 5 dargestellte optische Sendeeinheit 10. Dabei ist die optische Sendeeinheit 10 ein Mehrfachstrahlteiler. In dieser sind zwischen der Kollimationslinse 12 und dem zweiten Spiegel 13 ein erstes Prisma 31, ein zweites Prisma 32 und ein drittes Prisma 33 angeordnet. Die Anzahl der Prismen ist in dieser dritten Ausführungsform beispielhaft gewählt und kann in alternativen weiteren Ausführungsformen höher oder niedriger gewählt sein. In allen Ausführungsformen ist es jedoch vorteilhaft, wenn alle oder einige der Prismen 31, 32, 33 zu einem monolithischen Bauteil gekittet sind.

Der Scanstrahl 4 trifft nach Durchlaufen der Kollimationslinse 12 auf das erste Prisma 31 und wird von diesem aufgeteilt. Ein Anteil des Scanstrahls trifft als ein erster Scanstrahl 4a auf den zweiten Spiegel 13. Der erste Scanstrahl 4a wird durch den zweiten Spiegel 13 in eine Richtung parallel zu der optischen Achse der optischen Linse 3 umgelenkt. Ein weiterer Anteil des Scanstrahls wird von dem ersten Prisma 31 auf das zweite Prima 32 gelenkt.

Durch das zweite Prisma 32 wird der Anteil des Scanstrahls 4 aufgeteilt, welcher von dem ersten Prisma 31 auf das zweite Prisma 33 gelenkt wurde. Dabei wird ein Teil des Scanstrahls 4 als ein zweiter Scanstrahl 4b auf den zweiten Spiegel 13 gelenkt, und von diesem abgelenkt wird, um parallel zu der optischen Achse 8 der optischen Linse 3 zu verlaufen. Ein weiterer Anteil des Scanstrahls 4 wird von dem zweiten Prisma 32 auf das dritte Prisma 33 gelenkt und von diesem als ein dritter Scanstrahl 4c auf den zweiten Spiegel 13 gelenkt. Der dritte Scanstrahl 4c wird von dem zweiten Spiegel 13 derart abgelenkt, dass dieser ebenfalls parallel zu der optischen Achse der optischen Linse 3 verläuft.

Es sei darauf hingewiesen, dass das erste und das zweite Prisma 31, 32 ebenfalls halbdurchlässige Spiegel sein können, und dass das dritte Prisma 33 ein Spiegel sein kann.

Falls als Laser ein Kantenemitter zum Einsatz kommt, kann die Kollimationslinse 12 die schnelle Achse der Laserdiode kollimieren und gleichzeitig die langsame Achse auf den zweiten Spiegel 13 fokussieren. Wenn zur Strahlvervielfachung ein monolithisches Mehrfachstrahlteilerprisma zum Einsatz kommt, so kann der Sendestrahlengang wie in Figur 5 dargestellt, ausgeführt werden.

Zusammenfassend ist es also Gegenstand der Erfindung, eine Empfangslinse, also die optische Linse 3, in der Mitte eines Rotors 2 zu platzieren, damit der Linsendurchmesser dem Rotordurchmesser entspricht, was der prinzipiell größtmöglichen Empfangsapertur eines rotierenden Scanners entspricht. Damit der Empfangsstrahlengang zwischen optischer Linse 3 und Detektor 21 innerhalb des Rotors 2 Platz findet, wird dieser mithilfe des ersten Spiegels 22 gefaltet. Dieser erste Spiegel 22 kann optional gekrümmt sein, damit die Aberrationen der optischen Linse 3 teilweise kompensiert werden können. Die Sendeeinheit 10 bestehend aus Laser 11, Kollimationslinse 12, optionalem Mehrfachstrahlteiler und einem optionalen kleinen Umlenkspiegel befindet sich bevorzugt auf der anderen Seite der optischen Linse 3.

Die Strahlaufweitung wird in der entlang der Rotationsachse 6 (z. B. vertikale Achse) über einen divergenten Strahl erreicht. In der orthogonalen (z. B. horizontalen) Achse wird der Sendestrahl 4 kollimiert und optional zur Erhöhung der Augensicherheit vervielfacht, beispielsweise durch den in Figur 5 dargestellten Mehrfachstrahlteiler. Dadurch ergeben sich mehrere parallele Linienstrahlen, die einen Abstand aufweisen, der größer als die maximale Pupillenöffnung des menschlichen Auges ist (z. B. 8 mm). Empfangsseitig bildet die Empfangslinse die unterschiedlichen, gleichbeleuchteten (vertikalen) Senderichtungen auf den eindimensionalen Detektor ab. Die Bildauflösung der zweiten (horizontalen) Achse wird über die Rotation des Scankopfs, also des Rotors 3, erreicht.

Nebst obenstehender Offenbarung wird explizit auf die Offenbarung der Figuren 1 bis 5 verwiesen.

## Patentansprüche

1. Optisches Scansystem (1), umfassend:
- einen Rotor (2), welcher dazu eingerichtet ist, bei einem Scanvorgang um eine Rotationsachse (6) zu rotieren,
- eine optische Linse (3), die derart auf dem Rotor (2) angeordnet ist, dass die Linse (3) auf der Rotationsachse (6) liegt,
- eine optische Sendeeinheit (10), die an dem Rotor (2) angeordnet ist und dazu eingerichtet ist, einen Scanstrahl (4) in Richtung einer optischen Achse (8) der Linse (3) auszusenden, und
- eine optische Empfangseinheit (20), die an dem Rotor (2) angeordnet ist und einen Detektor (21) umfasst, der dazu eingerichtet ist, einen reflektierten Scanstrahl (5) zu empfangen, wobei der Detektor (21) derart angeordnet ist, dass der reflektierte Scanstrahl (5) mittels der Linse (3) auf den Detektor (21) fokussiert wird,
wobei ein Schwerpunkt (7) der Linse (3) auf der Rotationsachse (6) liegt,
wobei durch einen äußeren Umfang der Linse (3) bei einer Rotation um die Rotationsachse (6) eine Hüllfläche (9) definiert wird, und die optische Sendeeinheit (10) und die optische Empfangseinheit (20) derart auf dem Rotor (2) angeordnet sind, dass ein Bereich der optischen Sendeeinheit (10) und/oder der optischen Empfangseinheit (20) innerhalb des durch die Hüllfläche (9) definierten Volumens angeordnet ist,
**dadurch gekennzeichnet, dass** die optische Achse (8) der Linse (3) senkrecht auf der Rotationsachse (6) steht.

2. Optisches Scansystem (1) gemäß dem voranstehenden Anspruch, **dadurch gekennzeichnet, dass** die optische Empfangseinheit (20) einen ersten Spiegel (22) umfasst, wobei der erste Spiegel (22) derart angeordnet ist, dass der reflektierte Scanstrahl nach einem Durchlaufen der Linse (3) durch den ersten Spiegel (22) auf den Detektor (21) gelenkt wird.

3. Optisches Scansystem (1) gemäß Anspruch 2, **dadurch gekennzeichnet, dass** der erste Spiegel (22) eine fokussierende Oberfläche, insbesondere eine gewölbte Oberfläche, aufweist.

4. Optisches Scansystem (1) gemäß einem der voranstehenden Ansprüche, **dadurch gekennzeichnet, dass** die optische Sendeeinheit (10) einen optischen Emitter (11) und einen zweiten Spiegel (13) umfasst, wobei der zweite Spiegel (13) derart angeordnet ist, dass der von dem optischen Emitter (11) ausgesandte Scanstrahl (4) durch den zweiten Spiegel (13) in Richtung der optischen Achse (8) der Linse (3) umgelenkt wird.

5. Optisches Scansystem (1) gemäß einem der voranstehenden Ansprüche, **dadurch gekennzeichnet, dass** die optische Sendeeinheit (10) eine Kollimationslinse (12) umfasst.

6. Optisches Scansystem (1) gemäß einem der voranstehenden Ansprüche, **dadurch gekennzeichnet, dass** die optische Empfangseinheit (20) und/oder die optische Sendeeinheit (10) einen optischen Filter (23) umfasst.

7. Optisches Scansystem (1) gemäß einem der voranstehenden Ansprüche, **dadurch gekennzeichnet, dass** das optische Scansystem (1) ein koaxialer Makroscanner ist.

## Claims

1. Optical scanning system (1) comprising:
- a rotor(2), which is configured to rotate about an axis of rotation (6) during a scanning procedure,
- an optical lens (3), which is arranged on the rotor (2) such that the lens (3) lies on the axis of rotation (6),
- an optical transmission unit (10), which is arranged at the rotor (2) and is configured to transmit a scanning beam (4) in the direction of an optical axis (8) of the lens (3), and
- an optical reception unit (20), which is arranged at the rotor (2) and comprises a detector (21), which is configured to receive a reflected scanning beam (5), wherein the detector (21) is arranged such that the reflected scanning beam (5) is focused onto the detector (21) by means of the lens (3),
wherein a centroid (7) of the lens (3) lies on the axis of rotation (6),
wherein an envelope surface (9) is defined by an external circumference of the lens (3) during a rotation about the axis of rotation (6), and the optical transmission unit (10) and the optical reception unit (20) are arranged on the rotor (2) such that a region of the optical transmission unit (10) and/or of the optical reception unit (20) is arranged within the volume defined by the envelope surface (9),
**characterized in that** the optical axis (8) of the lens (3) is perpendicular to the axis of rotation (6).

2. Optical scanning system (1) according to the preceding claim, **characterized in that** the optical reception unit (20) comprises a first mirror (22), wherein the first mirror (22) is arranged such that the reflected scanning beam, after passing through the lens (3), is steered onto the detector (21) by the first mirror (22) .

3. Optical scanning system (1) according to Claim 2, **characterized in that** the first mirror (22) has a focusing surface, in particular a curved surface.

4. Optical scanning system (1) according to any of the preceding claims, **characterized in that** the optical transmission unit (10) comprises an optical emitter (11) and a second mirror (13), wherein the second mirror (13) is arranged such that the scanning beam (4) emitted by the optical emitter (11) is diverted in the direction of the optical axis (8) of the lens (3) by the second mirror (13) .

5. Optical scanning system (1) according to any of the preceding claims, **characterized in that** the optical transmission unit (10) comprises a collimating lens (12).

6. Optical scanning system (1) according to any of the preceding claims, **characterized in that** the optical reception unit (20) and/or the optical transmission unit (10) comprises an optical filter (23).

7. Optical scanning system (1) according to any of the preceding claims, **characterized in that** the optical scanning system (1) is a coaxial macroscanner.

## Revendications

1. Système de balayage optique (1), comprenant :
- un rotor (2) qui est conçu pour tourner sur un axe de rotation (6) pendant une opération de balayage,
- une lentille optique (3) qui est disposée sur le rotor (2) de telle sorte que la lentille (3) se trouve sur l'axe de rotation (6),
- une unité d'émission optique (10) disposée sur le rotor (2) et conçue pour émettre un faisceau de balayage (4) en direction d'un axe optique (8) de la lentille (3), et
- une unité de réception optique (20) disposée sur le rotor (2) et comprenant un détecteur (21) qui est conçu pour recevoir un faisceau de balayage réfléchi (5), le détecteur (21) étant disposé de telle sorte que le faisceau de balayage réfléchi (5) soit focalisé sur le détecteur (21) au moyen de la lentille (3),
dans lequel un centre de gravité (7) de la lentille (3) est situé sur l'axe de rotation (6),
dans lequel une surface enveloppante (9) est définie par une périphérie extérieure de la lentille (3) pendant une rotation autour de l'axe de rotation (6), et l'unité d'émission optique (10) et l'unité de réception optique (20) sont disposées sur le rotor (2) de telle sorte qu'une zone de l'unité d'émission optique (10) et/ou de l'unité de réception optique (20) soit disposée à l'intérieur du volume défini par la surface enveloppante (9),
**caractérisé en ce que** l'axe optique (8) de la lentille (3) est perpendiculaire à l'axe de rotation (6).

2. Système de balayage optique (1) selon la revendication précédente, **caractérisé en ce que** l'unité de réception optique (20) comprend un premier miroir (22), le premier miroir (22) étant disposé de telle sorte que le faisceau de balayage réfléchi soit dirigé vers le détecteur (21) après un passage de la lentille (3) à travers le premier miroir (22).

3. Système de balayage optique (1) selon la revendication 2, **caractérisé en ce que** le premier miroir (22) présente une surface de focalisation, notamment une surface bombée.

4. Système de balayage optique (1) selon l'une des revendications précédentes, **caractérisé en ce que** l'unité d'émission optique (10) comprend un émetteur optique (11) et un second miroir (13), le second miroir (13) étant disposé de telle sorte que le faisceau de balayage (4) émis par l'émetteur optique (11) soit dévié par le second miroir (13) en direction de l'axe optique (8) de la lentille (3).

5. Système de balayage optique (1) selon l'une des revendications précédentes, **caractérisé en ce que** l'unité d'émission optique (10) comprend une lentille de collimation (12).

6. Système de balayage optique (1) selon l'une des revendications précédentes, **caractérisé en ce que** l'unité de réception optique (20) et/ou l'unité d'émission optique (10) comprend un filtre optique (23).

7. Système de balayage optique (1) selon l'une des revendications précédentes, **caractérisé en ce que** le système de balayage optique (1) est un macro-scanner coaxial.
